# EUROPEAN PATENT APPLICATION

(11) **EP 4 722 777 A1**
(43) Date of publication of application: **08.04.2026**
(21) Application number: 25777572.6
(22) Date of filing: 12.03.2025
(51) Int. Cl.: G02B 6/36, G02B 6/40

(54) **DUPLEX OPTICAL CONNECTOR PLUG**

(30) Priority: 25.03.2024 JP 2024047643
(71) Applicant: SEIKOH GIKEN Co., Ltd., Chiba 270-2214 (JP)
(72) Inventor: TAIRA, Junji, Matsudo-shi, Chiba 270-2214 (JP)
(74) Representative: Lewis Silkin LLP
(86) International application number: PCT/JP2025/009275
(87) International publication number: WO 2025/204906

(57) **Abstract**

[Problem]

Provided with a duplex optical connector plug that can smoothly release connection (optical connection) between an optical connector plug and an optical connector adapter.

[Solution]

In a duplex optical connector plug 10, first and second tip portions of first and second engagement latches 77a, 77b enter first and second recessed hole portions of first and second guide protrusions 36a, 36b formed at front end portions of first and second plug frames 20a, 20b. When the first and second engagement latches 77a, 77b elastically deform and the first and second tip portions lift upward, upwardly inclined surfaces of the tip portions contact downwardly inclined surfaces of the first and second recessed hole portions. Thus, upward lifting of the first and second tip portions is prevented by the recessed hole portions. Therefore, the first and second elastic portions of the first and second engagement latches 77a, 77b are elastically deformed downward and sufficiently pressed downward.

## Description

### CROSS-REFERENCE TO RELATED APPLICATIONS

This Application claims the benefit of priority and is a Continuation application of the prior International Patent Application No. PCT/JP2025/009275, with an international filing date of March 12, 2025, which designated the United States, and is related to the Japanese Patent Application No. 2024-047643, filed March 25, 2024, the entire disclosures of all applications are expressly incorporated by reference in their entirety herein.

### TECHNICAL FIELD

The present invention relates to a duplex optical connector plug.

### BACKGROUND OF THE INVENTION

A duplex optical connector plug including: a first optical connector assembly having a first plug frame accommodating a first ferrule that holds a first optical fiber and extends in an axial direction, a first stop ring engaged with the first plug frame and a first spring installed between the first ferrule and the first stop ring to bias the first ferrule forward in the axial direction; a second optical connector assembly having a second plug frame accommodating a second ferrule that holds a second optical fiber and extends in the axial direction, a second stop ring engaged with the second plug frame and a second spring installed between the second ferrule and the second stop ring to bias the second ferrule forward in the axial direction, the second optical connector assembly being parallel to the first optical connector assembly; an inner housing accommodating a rear end portion of the first stop ring and a rear end portion of the second stop ring; an outer housing accommodating the inner housing; and a slider connected to the outer housing so as to be slidable in the axial direction is disclosed (shown in Patent Document 1).

The outer housing of the duplex optical connector plug includes: a front end opening that opens at a front end; an elastically deformable first engagement latch located on one side of a top wall of the outer housing and extending forward in the axial direction from the front end opening; and an elastically deformable second engagement latch located on the other side of the top wall of the outer housing and extending forward in the axial direction from the front end opening. Each of the first and second engagement latches includes: a contact protrusion located at a front end and configured to contact the top wall of the front end portion of the plug frame; and an engagement portion located rearward in the axial direction of the contact protrusion and engaged with the optical connector adapter when the first and second connector assemblies are inserted into the optical connector adapter.

In the above described duplex optical connector plug, when the first and second connector assemblies are inserted into the optical connector adapter and pressed into the interior of the optical connector adapter, elastic portions of the first and second engagement latches elastically deform downward while engagement portions of the first and second engagement latches engage with engagement portions of the optical connector adapter. Thus, the optical connector plug is connected to the optical connector adapter to establish an optical connection state. In a state that the slider is not slid rearward in the axial direction relative to the outer housing, the elastic portions of the first and second engagement latches are not pressed downward and the engagement state of the engagement portions of the first and second engagement latches with the optical connector adapter is maintained.

### PRIOR ART DOCUMENT

### PATENT DOCUMENTS

[Patent Document 1] Japanese Patent Publication No. 2021-144132

### SUMMARY OF THE INVENTION

### PROBLEM TO BE SOLVED BY THE INVENTION

In the duplex optical connector plug disclosed in Patent Document 1, when the slider is slid rearward in the axial direction relative to the outer housing, the elastic portions of the first and second engagement latches are pressed downward by a mutual pressing down mechanism between the slider and the first and second engagement latches and the engagement of the engagement portions of the first and second engagement latches with respect to the optical connector adapter is released. Thus, the first and second connector assemblies are allowed to be pulled from the optical connector adapter and the connection (optical connection) between the optical connector plug and the optical connector adapter is released.

However, in the above described duplex optical connector plug, if the engagement latches elastically deform and depress downward while the front portions of the engagement latches curve upward, the tip portions of the engagement latches may lift upward from the top walls of the front end portions of the plug frames. Thus, downward pressing of the engagement portions of the engagement latches may be insufficient. If the engagement portions of the engagement latches cannot be sufficiently pressed downward, the engagement of the engagement portions with respect to the optical connector adapter is maintained. Thus, the connection (optical connection) between the optical connector plug and the optical connector adapter cannot be released.

The object of the present invention is to provide a duplex optical connector plug that can smoothly release the connection (optical connection) between the optical connector plug and the optical connector adapter.

### MEANS FOR SOLVING THE PROBLEMS

The premise of the present invention for solving the above described problems is a duplex optical connector plug including: a first optical connector assembly having a first plug frame accommodating a first ferrule that holds a first optical fiber and extends in an axial direction, a first stop ring engaged with the first plug frame and a first spring installed between the first ferrule and the first stop ring to bias the first ferrule forward in the axial direction; a second optical connector assembly having a second plug frame accommodating a second ferrule that holds a second optical fiber and extends in the axial direction, a second stop ring engaged with the second plug frame and a second spring installed between the second ferrule and the second stop ring to bias the second ferrule forward in the axial direction, the second optical connector assembly being parallel to the first optical connector assembly; an inner housing accommodating rear end portions of the first and second stop rings; and an outer housing accommodating the inner housing.

The feature of the present invention based on the above described premise is that each of the first and second plug frames has a guide protrusion protruding upward from a top wall of a front end portion of each of the first and second plug frames, the guide protrusion has a recessed hole portion recessed forward in the axial direction from a rear end surface facing each of the first and second stop rings, the outer housing has a front end opening that opens at a front end of the outer housing, a first engagement latch that is elastically deformable, extends in the axial direction from one side portion of the top wall of the outer housing and extends forward in the axial direction from the front end opening, and a second engagement latch that is elastically deformable, extends in the axial direction from the other side portion of the top wall of the outer housing and extends forward in the axial direction from the front end opening, each of the first and second engagement latches has a tip portion located on the top wall of the front end portion of each of the first and second plug frames so as to enter the recessed hole portion and an engagement portion formed rearward of the tip portion in the axial direction so as to engage with an optical connector adapter when the first and second connector assemblies are inserted into the optical connector adapter, and an upward lifting of the tip portion is prevented by the recessed hole portion when the first and second engagement latches are elastically deformed.

In one example of the present invention, the recessed hole portion has a downwardly inclined surface that inclines downward toward a front in the axial direction from the rear end surface of the guide protrusion, the tip portion of each of the first and second engagement latches has an upwardly inclined surface that inclines upward toward a rear in the axial direction from a front end of the tip portion and a contact surface configured to contact the top wall of the front end portion of each of the first and second plug frames, and the upwardly inclined surface of the tip portion is configured to contact the downwardly inclined surface of the recessed hole portion when the first and second engagement latches are elastically deformed and the tip portion is lifted upward.

In another example of the present invention, each of the first and second engagement latches has a connection portion connected to the top wall of the outer housing and an elastic portion extending forward in the axial direction from the connection portion and extending forward in the axial direction from the front end opening of the outer housing, the elastic portion has a rear elastic portion located between the connection portion and the engagement portion and extending in the axial direction and a front elastic portion located between the engagement portion and the tip portion and extending in the axial direction, and a vertical thickness dimension of the rear elastic portion gradually increases from the connection portion toward the engagement portion.

In another example of the present invention, a length dimension of the rear elastic portion of the elastic portion in the axial direction is longer than the length dimension of the front elastic portion of the elastic portion in the axial direction, the front elastic portion inclines downward from a front end of the rear elastic portion to a front in the axial direction, and the vertical thickness dimension of the front elastic portion is smaller than the vertical thickness dimension of the rear elastic portion.

In another example of the present invention, the rear elastic portion of the elastic portion has a rear portion extending substantially horizontally forward in the axial direction from the connection portion to an intermediate position of the rear elastic portion and a front portion extending from the intermediate position of the rear elastic portion forward in the axial direction with a downward inclination and further extending substantially horizontally forward to the engagement portion, and the vertical thickness dimension of the front elastic portion is smaller than the vertical thickness dimension of the rear portion and the front portion of the rear elastic portion.

In another example of the present invention, a vertical elastic force of the front elastic portion is smaller than the vertical elastic force of the rear portion and the front portion of the rear elastic portion, and the front elastic portion is elastically deformed more easily compared to the rear portion and the front portion.

In another example of the present invention, in the duplex optical connector plug, in a state that the optical connector adapter is connected to the first and second connector assemblies inserted into the optical connector adapter, when the optical connector plug is pulled in a direction to release a connection to the optical connector adapter and a tensile load is applied on the first and second engagement latches in the axial direction and the first and second engagement latches are to extended in the axial direction, the upward lifting of the tip portion is prevented by the upwardly inclined surface of the tip portion of the first and second engagement latches contacting the downwardly inclined surface of the recessed hole portion.

In another example of the present invention, the duplex optical connector plug has a slider connected to the outer housing so as to be slidable in the axial direction, an engagement state of the first and second engagement latches with the optical connector adapter is maintained in a state that the slier is not slid rearward in the axial direction with respect to the outer housing, the engagement state of the first and second engagement latches with the optical connector adapter is released in a state that the slier is slid rearward in the axial direction with respect to the outer housing, the slider pushes the first and second engagement latches downward by a predetermined pressing down mechanism and the tip portion of the pressing down mechanism enters in the recessed hole portion of the guide protrusion.

In another example of the present invention, the pressing down mechanism has an inclined upper surface of the front portion of the rear elastic portion extending forward in the axial direction with a downward inclination from the intermediate position, and the slider has an inclined lower surface formed on both sides of the slider and slidably contacted to the inclined upper surface, the inclined lower surface extending rearward in the axial direction with an upward inclination.

### EFFECTS OF THE INVENTION

According to the duplex optical connector plug of the present invention, the connection (optical connection) between the optical connector plug and the optical connector adapter can be smoothly released.

### BRIEF DESCRIPTION OF DRAWINGS

Fig. 1 is a perspective view of a duplex optical connector plug shown as an example.
Fig. 2 is a side view of the duplex optical connector plug.
Fig. 3 is a cross-sectional view taken along line X-X of Fig. 1.
Fig. 4 is an exploded perspective view of the duplex optical connector plug.
Fig. 5 is a perspective view of the first and second plug frames.
Fig. 6 is a cross-sectional view taken along line Y-Y of Fig. 5.
Fig. 7 is a perspective view of the first and second stop rings.
Fig. 8 is a perspective view of an inner housing shown in a separated state into two parts.
Fig. 9 is an external view of the inner housing.
Fig. 10 is a perspective view of an outer housing.
Fig. 11 is a front view of the outer housing.
Fig. 12 is a perspective view of a slider viewed from above.
Fig. 13 is a perspective view of the slider viewed from below.
Fig. 14 is a cross-sectional view taken along line Z-Z of Fig. 12.

### DETAILED DESCRIPTION OF THE INVENTION

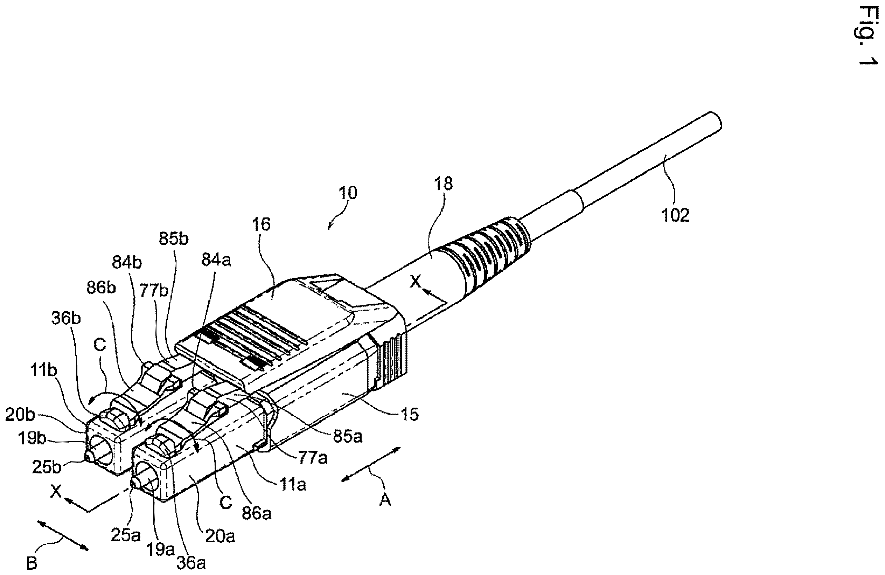

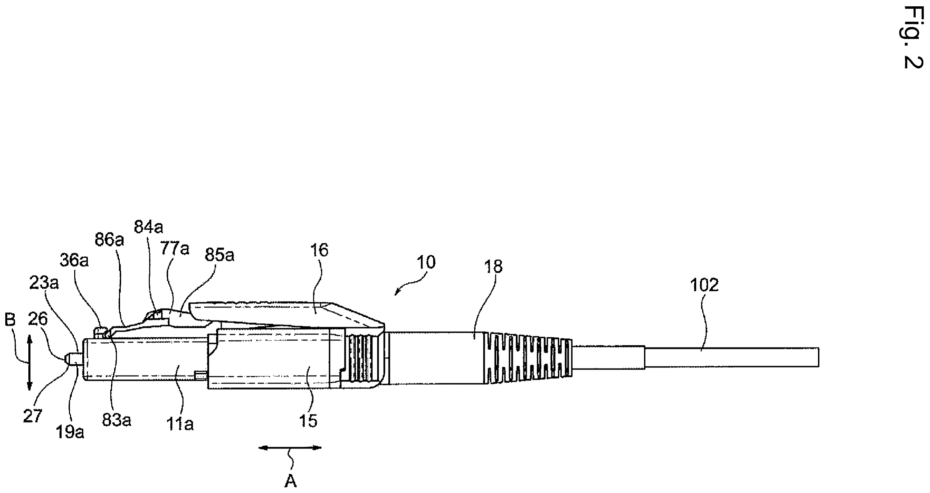

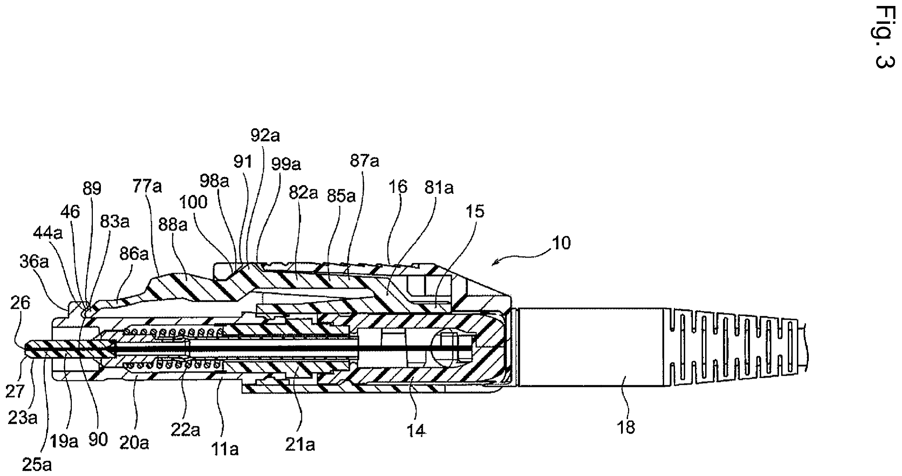

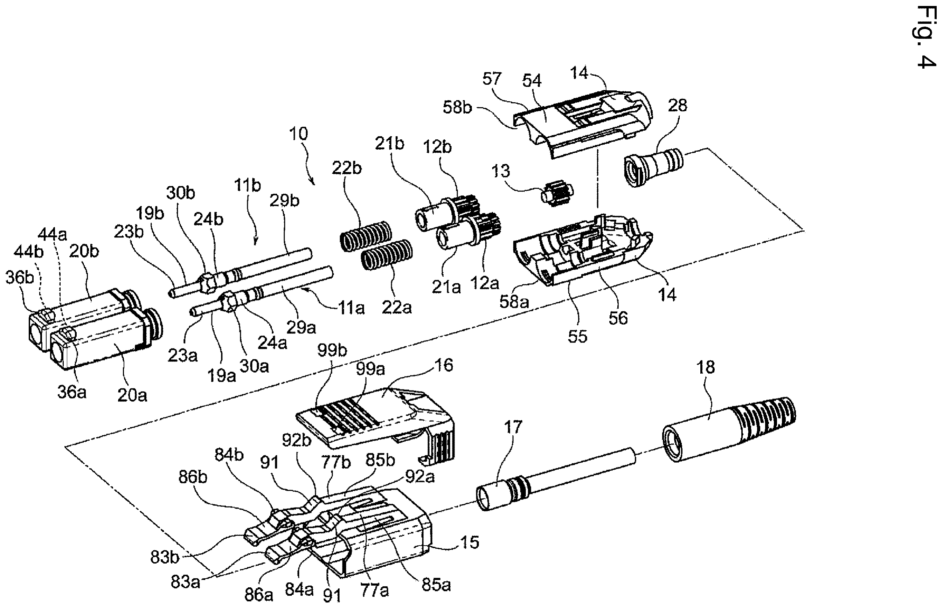

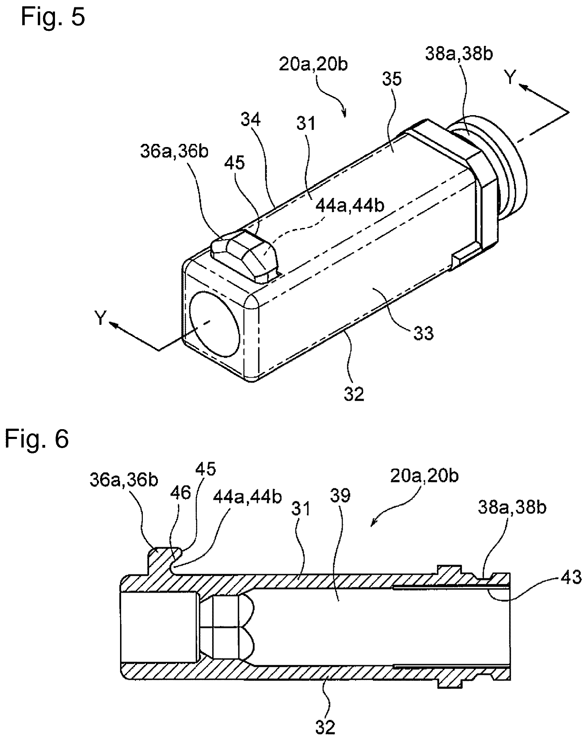

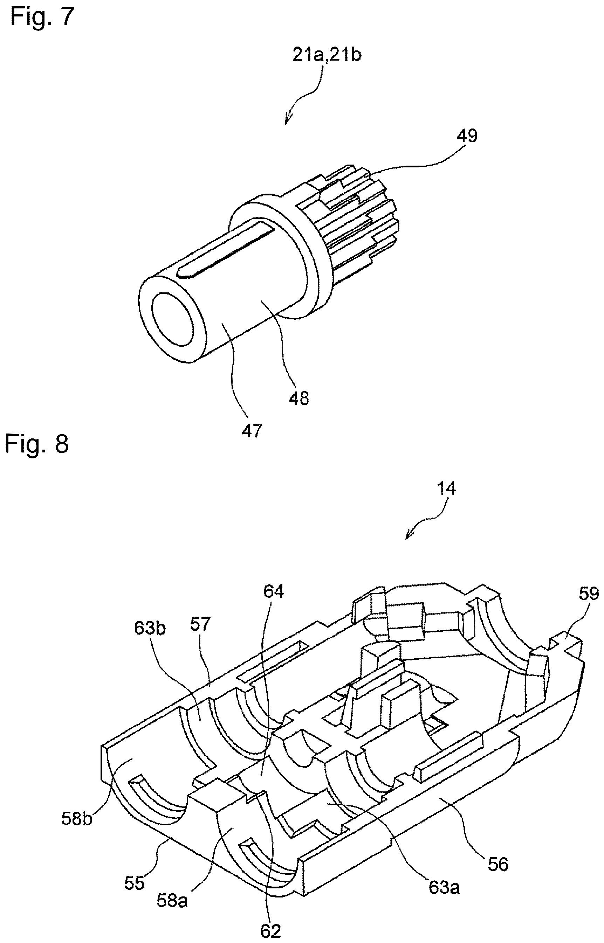

The details of the duplex optical connector plug according to the present invention will be explained with reference to the attached drawings as follows. Fig. 1 is a perspective view of a duplex optical connector plug 10 shown as an example. Fig. 2 is a side view of the duplex optical connector plug 10. Fig. 3 is a cross-sectional view taken along line X-X of Fig. 1. Fig. 4 is an exploded perspective view of the duplex optical connector plug 10. Fig. 5 is a perspective view of first and second plug frames 20a, 20b. Fig. 6 is a cross-sectional view taken along line Y-Y of Fig. 5. Fig. 7 is a perspective view of first and second stop rings 21a, 21b. In Figs. 1 and 2, the axial direction is indicated by arrow A, the radial direction (lateral direction or vertical direction) is indicated by arrow B, and the circumferential direction is indicated by arrow C.

The duplex optical connector plug 10 is attached to a terminal portion of an optical fiber cord 102 and used for optical connection between optical fibers by connecting to an optical connector adapter (not illustrated). The optical connector plug 10 is formed from a first optical connector assembly 11a and a second optical connector assembly 11b, a first gear 12a and a second gear 12b, an intermediate gear 13, an inner housing 14 and an outer housing 15, a slider 16 and a crimp ring 17, and a boot 18 and a pipe 28. As shown in the exploded perspective view of Fig. 4, in the optical connector plug 10, the inner housing 14, the outer housing 15, the pipe 28 and the slider 16 are arranged rearward of the first and second optical connector assemblies 11a, 11b in the axial direction, and the crimp ring 17 and the boot 18 are arranged rearward of the slider 16 in the axial direction.

The first and second optical connector assemblies 11a, 11b have first and second ferrules 19a, 19b extending in the axial direction, first and second plug frames 20a, 20b accommodating the first and second ferrules 19a, 19b, first and second stop rings 21a, 21b engaged with the first and second plug frames 20a, 20b, and first and second springs 22a, 22b (coil springs). The first and second ferrules 19a, 19b are formed from first and second capillaries 23a, 23b extending in the axial direction and first and second sleeves 24a, 24b formed in cylindrical shapes extending in the axial direction. At least one first and second optical fiber 25a, 25b is held in each of the first and second capillaries 23a, 23b. The second optical connector assembly 11b is adjacent to the first optical connector assembly 11a and extends parallel to the first optical connector assembly 11a in the axial direction.

The outer diameter of each of the first and second capillaries 23a, 23b is 1.2485 mm to 1.2493 mm. An optical fiber insertion hole extending in the axial direction is formed inside each of the first and second capillaries 23a, 23b (ferrules). The first and second optical fibers 25a, 25b are inserted into the optical fiber insertion holes formed in the first and second capillaries 23a, 23b respectively. The second capillary 23b is laterally adjacent to the first capillary 23a and extends parallel to the first capillary 23a in the axial direction. Each of the first and second capillaries 23a, 23b is formed in a substantially cylindrical shape that is long in the axial direction. A tip surface 26 is provided on the front end of each of the first and second capillaries 23a, 23b in the axial direction and an end surface of each of the first and second optical fibers 25a, 25b is exposed on the tip surface 26. A chamfered portion 27 is provided on an outer diameter region of the end surface of the tip surface 26. The rear end portion of each of the first and second capillaries 23a, 23b is inserted into a capillary insertion hole of each of the first and second sleeves 24a, 24b and is fixed and held in the capillary insertion hole of each of the first and second sleeves 24a, 24b. One end portion of each of the first and second optical fiber cores is inserted into a core insertion hole of each of the first and second sleeves 24a, 24b and fixed and held in the core insertion hole of each of the first and second sleeves 24a, 24b.

The first and second sleeves 24a, 24b are respectively connected rearward of the first and second capillaries 23a, 23b (first and second ferrules 19a, 19b) in the axial direction. First and second core covers 29a, 29b (PTFE tubes) extending in the axial direction while covering entire outer peripheries of the first and second optical fibers 25a, 25b are respectively connected rearward of the first and second sleeves 24a, 24b in the axial direction. First and second flanges 30a, 30b formed in a polygonal cylindrical shape each having a diameter larger than that of each of the first and second capillaries 23a, 23b and each of the first and second core covers 29a, 29b are integrally formed at the front end of the first and second sleeves 24a, 24b respectively. The second core cover 29b and the second flange 30b are adjacent to the first core cover 29a and first flange 30a in the lateral direction and extend parallel to the first core cover 29a in the axial direction.

Each of the first and second plug frames 20a, 20b is made from synthetic resin material and formed in a substantially rectangular hollow tubular shape. Each of the first and second plug frames 20a, 20b has a top wall 31 and a bottom wall 32 having a substantially rectangular shape and extending in the axial direction while being spaced apart and opposing in the vertical direction, and both side walls 33, 34 having a substantially rectangular shape and extending in the axial direction while being spaced apart and opposing in the lateral direction. First and second guide protrusions 36a, 36b protruding upward from upper surface 35 of the top wall 31 are formed at a front portion of the top wall 31 of each of the first and second plug frames 20a, 20b (top wall 31 of front end portion of each of the first and second plug frames 20a, 20b) in the axial direction. The second plug frame 20b is laterally adjacent to the first plug frame 20a and extends parallel to the first plug frame 20a in the axial direction.

First and second recessed hole portions 44a, 44b are formed in the first and second guide protrusions 36a, 36b of the first and second plug frames 20a, 20b respectively. Each of the first and second recessed hole portions 44a, 44b is recessed toward the front in the axial direction from the rear end surface 45 of each of the first and second guide protrusions 36a, 36b that faces each of the first and second stop rings 21a, 21b so as to project forward in the axial direction. Each of the first and second recessed hole portions 44a, 44b has a downwardly inclined surface 46 that inclines downward from an upper part of the rear end surface 45 of each of the first and second guide protrusions 36a, 36b to the front in the axial direction.

Each of the first and second stop rings 21a, 21b has a front end portion 47 (front end cylindrical portion) located forward in the axial direction, a rear end portion 49 (rear end cylindrical portion) located rearward in the axial direction, and an intermediate portion 48 (intermediate cylindrical portion) extending between the front end portion 47 and the rear end portion 49. The second stop ring 21b is laterally adjacent to the first stop ring 21a and extends parallel to the first stop ring 21a in the axial direction.

The first and second springs 22a, 22b are arranged between the first and second ferrules 19a, 19b and the first and second stop rings 21a, 21b, are inserted through the first and second core covers 29a, 29b respectively and extend in the axial direction. The front ends of the first and second springs 22a, 22b abut against the first and second flanges 30a, 30b of the first and second sleeves 24a, 24b respectively. The rear ends of the first and second springs 22a, 22b abut against the front end portions 47 of the first and second stop rings 21a, 21b respectively. The first and second springs 22a, 22b respectively bias the first and second ferrules 19a, 19b forward in the axial direction by elastic force in the axial direction. The second spring 22b is laterally adjacent to the first spring 22a and extends parallel to the first spring 22a in the axial direction.

The first and second gears 12a, 12b are formed on the rear end portions 49 of the first and second stop rings 21a, 21b respectively and extend in the axial direction.

The intermediate gear 13 is interposed between the first gear 12a and the second gear 12b and extends in the axial direction. The intermediate gear 13 is externally adjacent to the first and second gears 12a, 12b and transmits the rotational force of one of the first and second gears 12a, 12b to the other gear while rotating the other gear in the same direction as one gear. The gear ratio of the first gear 12a, the second gear 12b and the intermediate gear 13 is 1.

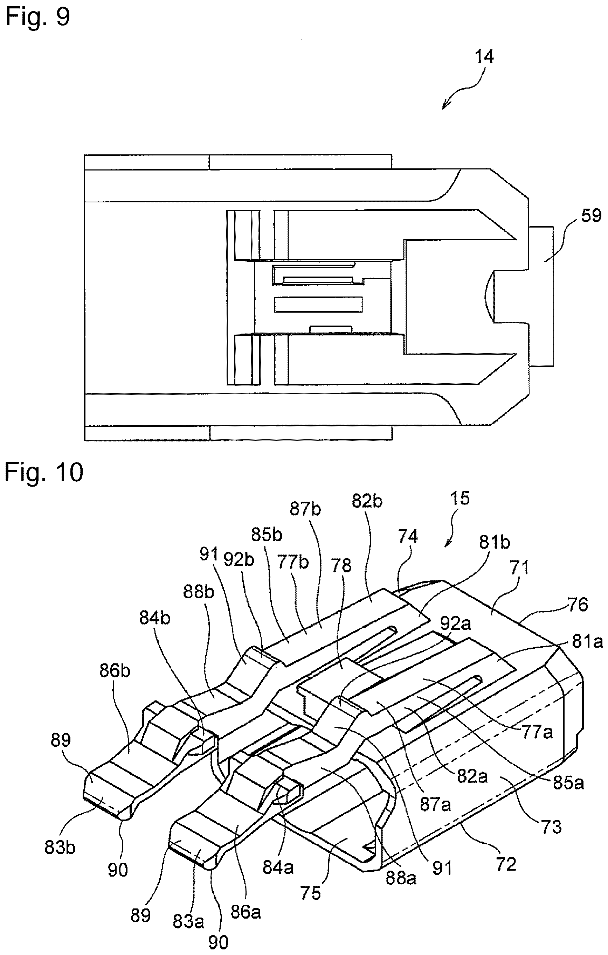

Fig. 8 is a perspective view of the inner housing 14 shown in a separated state into two parts. Fig. 9 is an external view of the inner housing 14. The inner housing 14 has a top wall 54 and a bottom wall 55 extending in the axial direction while being spaced apart and opposing in the vertical direction, and both side walls 56, 57 extending in the axial direction while being spaced apart and opposing in the lateral direction. A first opening 58a opening at the front end of the inner housing 14 for inserting the first stop ring 21a and a second opening 58b opening at the front end of the inner housing 14 for inserting the second stop ring 21b are provided.

A first gear accommodation portion 63a surrounded by the walls 54-57 and a partition wall 62, a second gear accommodation portion 63b surrounded by the walls 54-57 and the partition wall 62, and an intermediate gear accommodation portion 64 surrounded by the partition wall 62 and located between the first and second gear accommodation portions 63a, 63b are formed inside the inner housing 14. The first gear 12a formed on the rear end portion 49 of the first stop ring 21a is rotatably accommodated (arranged) in the first gear accommodation portion 63a. The second gear 12b formed on the rear end portion 49 of the second stop ring 21b is rotatably accommodated (arranged) in the second gear accommodation portion 63b. The intermediate gear 13 is rotatably accommodated (arranged) in the intermediate gear accommodation portion 64.

In the inner housing 14, the first and second gears 12a, 12b and the intermediate gear 13 are accommodated in the first and second gear accommodation portions 63a, 63b and the intermediate gear accommodation portion 64. Thus, the gears 12a, 12b, 13 are arranged laterally while the first gear 12a and intermediate gear 13 are externally adjacent and the second gear 12b and intermediate gear 13 are externally adjacent.

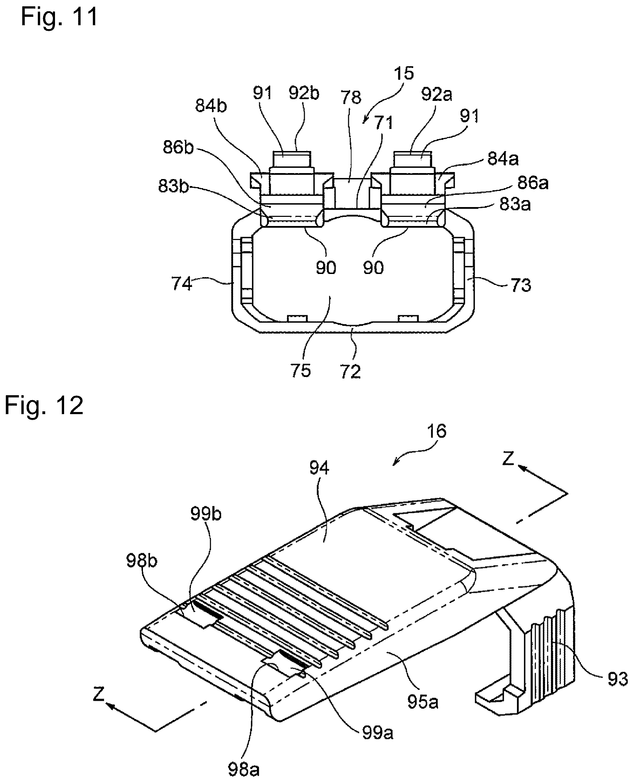

Fig. 10 is a perspective view of the outer housing 15. Fig. 11 is a front view of the outer housing 15. The outer housing 15 is made from synthetic resin material. The outer housing 15 has a top wall 71 and a substantially rectangular bottom wall 72 extending in the axial direction while being spaced apart and opposing in the vertical direction, and substantially rectangular both side walls 73, 74 extending in the axial direction while being spaced apart and opposing in the lateral direction. The outer housing 15 has a front end opening 75 opening at the front end of the outer housing 15, a rear end opening 76 opening at the rear end of the outer housing 15, and a pair of elastically deformable first engagement latch 77a and elastically deformable second engagement latch 77b connected to the top wall 71.

The first and second engagement latches 77a, 77b are spaced apart by a predetermined dimension in the width direction and extend linearly in the axial direction parallel to each other. The first and second engagement latches 77a, 77b are located on one side of the top wall 71 of the outer housing 15 and extend forward in the axial direction from the front end opening 75 of the outer housing 15. The first and second engagement latches 77a, 77b are formed from first and second connection portions 81a, 81b connected to the rear portion of one side of the top wall 71 of the outer housing 15 and integrated with the outer housing 15, and first and second elastic portions 82a, 82b (first and second elastic deformation portions) connected to the first and second connection portions 81a, 81b and extending forward in the axial direction from the first and second connection portions 81a, 81b. First and second tip portions 83a, 83b are formed at front ends of the first and second engagement latches 77a, 77b and first and second engagement portions 84a, 84b are formed rearward of the first and second tip portions 83a, 83b in the axial direction and projecting in the width direction.

The first and second elastic portions 82a, 82b have flexibility and elastically deform in the vertical direction. The first and second elastic portions 82a, 82b have first and second rear elastic portions 85a, 85b connected to the first and second connection portions 81a, 81b and extending forward in the axial direction from the first and second connection portions 81a, 81b toward the first and second engagement portions 84a, 84b, and first and second front elastic portions 86a, 86b located between the first and second engagement portions 84a, 84b and the first and second tip portions 83a, 83b and extending forward in the axial direction from the first and second engagement portions 84a, 84b toward the first and second tip portions 83a, 83b.

The axial length dimension of each of the first and second rear elastic portions 85a, 85b is longer than the axial length dimension of each of the first and second front elastic portions 86a, 86b of the first and second elastic portions 82a, 82b. The vertical thickness dimension of each of the first and second rear elastic portions 85a, 85b gradually increases from the first and second connection portions 81a, 81b toward the first and second engagement portions 84a, 84b. Accordingly, the vertical elastic force of each of the first and second rear elastic portions 85a, 85b extending toward the first and second connection portions 81a, 81b is smaller than the vertical elastic force of each of the first and second rear elastic portions 85a, 85b extending toward the first and second engagement portions 84a, 84b. Thus, the first and second rear elastic portions 85a, 85b on the side of the first and second connection portions 81a, 81b elastically deform more easily compared to the first and second rear elastic portions 85a, 85b on the side of the first and second engagement portions 84a, 84b.

The first and second rear elastic portions 85a, 85b have first and second rear portions 87a, 87b extending from the first and second connection portions 81a, 81b forward in the axial direction toward intermediate positions of the first and second rear elastic portions 85a, 85b with inclinations of plus or minus 5 degrees, and first and second front portions 88a, 88b extending from the intermediate positions of the first and second rear elastic portions 85a, 85b forward in the axial direction with a downward inclination and then extending to the first and second engagement portions 84a, 84b with inclinations of plus or minus 5 degrees.

The first and second rear portions 87a, 87b are spaced upward from the top wall 71 of the outer housing 15 and extend parallel to the top wall 71 of the outer housing 15 in the axial direction. The first and second front portions 88a, 88b are located at substantially the same height as the top wall 71 of the outer housing 15 and extend forward in the axial direction from the front end opening 75 of the outer housing 15. At the intermediate positions of the first and second rear elastic portions 85a, 85b (between the first and second rear portions 87a, 87b and the first and second front portions 88a, 88b), first and second inclined protrusions 92a, 92b (pressing down mechanism) having inclined surfaces 91 that incline with an ascending gradient toward the axial rear are formed.

The vertical thickness dimension of each of the first and second front elastic portions 86a, 86b is smaller than the vertical thickness dimension of each of the first and second rear elastic portions 85a, 85b (first and second rear portions 87a, 87b and first and second front portions 88a, 88b). Accordingly, the vertical elastic force of each of the first and second front elastic portions 86a, 86b is smaller than the vertical elastic force of each of the first and second rear elastic portions 85a, 85b. Thus, the first and second front elastic portions 86a, 86b elastically deform more easily compared to the first and second rear elastic portions 85a, 85b.

The first and second engagement portions 84a, 84b are formed between the first and second rear elastic portions 85a, 85b and the first and second front elastic portions 86a, 86b of the first and second engagement latches 77a, 77b. The first and second engagement portions 84a, 84b detachably engage with the optical connector adapter when the first and second optical connector assemblies 11a, 11b are inserted into the optical connector adapter. The first and second tip portions 83a, 83b are located forward of the top wall 31 of the first and second plug frames 20a, 20b (top wall 31 of the front end portion of the first and second plug frames 20a, 20b) in the axial direction. The first and second tip portions 83a, 83b enter the first and second recessed hole portions 44a, 44b of the first and second guide protrusions 36a, 36b respectively.

Each of the first and second tip portions 83a, 83b has an upwardly inclined surface 89 that inclines upward toward a rear in the axial direction from the front end of each of the first and second tip portions 83a, 83b, and a contact surface 90 configured to contact the top wall 31 located forward of the first and second plug frames 20a, 20b (top wall 31 of the front end portion of the first and second plug frames 20a, 20b) in the axial direction. In the first and second engagement latches 77a, 77b, when the first and second elastic portions 82a, 82b elastically deform and the first and second tip portions 83a, 83b lift upward (when spaced upward from the top wall 31 of the front end portion of the first and second plug frames 20a, 20b), the upwardly inclined surfaces 89 of the first and second tip portions 83a, 83b contacts the downwardly inclined surface 46 of the first and second recessed hole portions 44a, 44b.

The outer housing 15 can accommodate the inner housing 14 in a state that the top wall 54 of the inner housing 14 faces the top wall 71 and the bottom wall 55 of the inner housing 14 faces the bottom wall 72. On the contrary, the outer housing can also accommodate the inner housing 14 in a state that the bottom wall 55 of the inner housing 14 faces the top wall 71 and the top wall 54 of the inner housing 14 faces the bottom wall 72. As described above, the outer housing 15 can accommodate the inner housing 14 in an upside-down state.

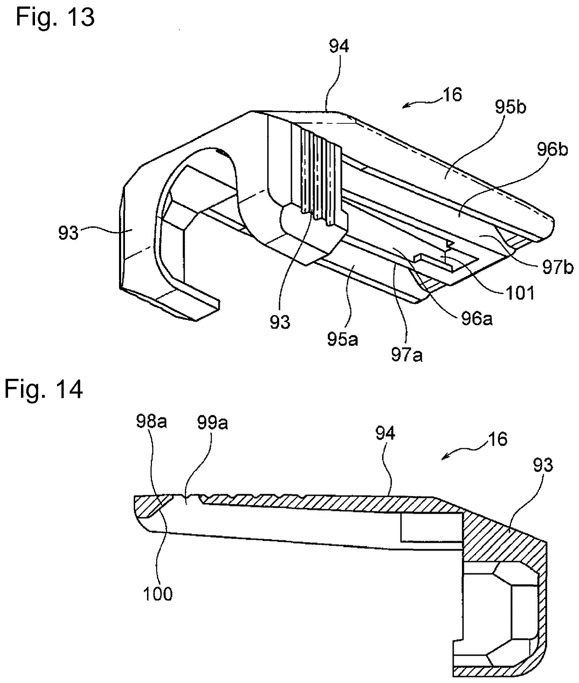

Fig. 12 is a perspective view of the slider 16 viewed from above. Fig. 13 is a perspective view of the slider 16 viewed from below. Fig. 14 is a cross-sectional view taken along line Z-Z of Fig. 12. The slider 16 is connected to the outer housing 15 so as to be axially slidable. The slider 16 is formed from a frame 93 arranged rearward of the rear end opening 76 of the outer housing 15 and a sliding top wall 94 (sliding plate) extending forward in the axial direction from a top portion of the frame 93.

The sliding top wall 94 has a first outer guide wall 95a extending downward from one side edge while extending in the axial direction, a first inner guide wall 96a located inward in the width direction from the first outer guide wall 95a and extending downward from a width-direction center of the sliding top wall 94 while extending in the axial direction, a second outer guide wall 95b extending downward from the other side edge while extending in the axial direction, and a second inner guide wall 96b located inward in the width direction from the second outer guide wall 95b and extending downward from the width-direction center of the sliding top wall 94 while extending in the axial direction.

On one side of the sliding top wall 94, a first entry path 97a extending in the axial direction between the first outer guide wall 95a and the first inner guide wall 96a is formed so that the first connection portion 81a and the rear portion of the first elastic portion 82a of the first engagement latch 77a enter in the first entry path 97a. On the other side of the sliding top wall 94, a second entry path 97b extending in the axial direction between the second outer guide wall 95b and the second inner guide wall 96b is formed so that the second connection portion 81b and the rear portion of the second elastic portion 82b of the second engagement latch 77b enter in the second entry path 97b.

First and second through holes 99a, 99b having first and second inclined recesses 98a, 98b (pressing down mechanism) recessed toward the upper surface of the slider 16 are formed on one side of the slider 16 on the front of the first and second entry paths 97a, 97b. The first and second inclined recesses 98a, 98b have inclined surfaces 100 that incline with an ascending gradient toward the rear in the axial direction. The first and second inclined protrusions 92a, 92b (pressing down mechanism) formed at the intermediate position of the first and second rear elastic portions 85a, 85b enter the first and second through holes 99a, 99b, and the inclined surfaces 91 of the first and second inclined protrusions 92a, 92b slidably contact the inclined surfaces 100 of the first and second inclined recesses 98a, 98b.

The slider 16 is connected (attached) to the outer housing 15 by engaging an engagement key 78 of the outer housing 15 with a key engagement portion 101 of the slider 16. In a state that the slider 16 is connected to the outer housing 15, the frame 93 of the slider 16 is located rearward (immediately behind) the rear end opening 76 of the outer housing 15 in the axial direction, the first connection portion 81a and the rear portion of the first elastic portion 82a of the first engagement latch 77a enter the first entry path 97a of the slider 16, and the second connection portion 81b and the rear portion of the second elastic portion 82b of the second engagement latch 77b enter the second entry path 97b of the slider 16.

Furthermore, the first and second inclined protrusions 92a, 92b formed at an intermediate position of the first and second rear elastic portions 85a, 85b of the first and second engagement latches 77a, 77b enter the first and second through holes 99a, 99b of the slider 16, and the inclined surfaces 91 of the first and second inclined protrusions 92a, 92b slidably contact the inclined surfaces 100 of the first and second inclined recesses 98a, 98b of the first and second through holes 99a, 99b. The slider 16 slides forward and rearward in the axial direction on the upper surface of the top wall 71 of the outer housing 15 by the axial length dimension of the first and second inclined recesses 98a, 98b.

The crimp ring 17 is formed in a substantially cylindrical shape and extends in the axial direction. The pipe 28 is inserted through a cylindrical portion 59 located rearward of the inner housing 14 in the axial direction. The boot 18 is made from metal material or synthetic resin material. The boot 18 is formed in a substantially cylindrical shape and extends in the axial direction. A first optical fiber core containing the first optical fiber 25a and a second optical fiber core containing the second optical fiber 25b are bundled together in the inner housing 14 to form an optical fiber cord 102. The optical fiber cord 102 is inserted through the crimp ring 17 and the boot 18 and extends rearward from the rear end of the boot 18 in the axial direction.

In the assembled duplex optical connector plug 10, as shown in Fig. 3, the first and second front portions 88a, 88b and the first and second front elastic portions 86a, 86b are spaced upward from the upper surface 35 of the top wall 31 of the first and second plug frames 20a, 20b, and the first and second tip portions 83a, 83b of the first and second engagement latches 77a, 77b enter first and second engagement recesses 38a, 38b formed in the first and second guide protrusions 36a, 36b. The contact surface 90 of the first and second tip portions 83a, 83b contacts the upper surface 35 of the top wall 31 located forward of the first and second plug frames 20a, 20b (upper surface 35 of the top wall 31 of the front end portion of the first and second plug frames 20a, 20b) in the axial direction, and the upwardly inclined surface 89 of the first and second tip portions 83a, 83b is spaced rearward in the axial direction from the downwardly inclined surfaces 46 of the first and second recessed hole portions 44a, 44b.

In the duplex optical connector plug 10, when the first and second optical connector assemblies 11a, 11b are inserted into the optical connector adapter and pressed into the interior of the optical connector adapter, the first and second elastic portions 82a, 82b (first and second rear elastic portions 85a, 85b and first and second front elastic portions 86a, 86b) of the first and second engagement latches 77a, 77b elastically deform downward while the first and second engagement portions 84a, 84b of the first and second engagement latches 77a, 77b engage with the engagement portions of the optical connector adapter. Thus, the optical connector plug 10 is connected to the optical connector adapter to establish an optical connection state. In a state that the slider 16 is not slid rearward in the axial direction relative to the outer housing 15, the first and second elastic portions 82a, 82b (first and second rear elastic portions 85a, 85b and first and second front elastic portions 86a, 86b) of the first and second engagement latches 77a, 77b are not pressed downward, and the engagement state of the first and second optical connector assemblies 11a, 11b (first and second engagement portions 84a, 84b of the first and second engagement latches 77a, 77b) with the optical connector adapter is maintained.

In the duplex optical connector plug 10, the polarity can be changed by rotating the first and second optical connector assemblies 11a, 11b.

An example of a connection release procedure for releasing the connection between the optical connector plug 10 and the optical connector adapter is as follows. From a state where the optical connector plug 10 is engaged with the optical connector adapter, the slider 16 is slid rearward in the axial direction relative to the outer housing 15. When the slider 16 is slid rearward in the axial direction, the inclined surface 100 of the first inclined recess 98a (pressing down mechanism) formed in the first through hole 99a of the slider 16 presses the inclined surface 91 (pressing down mechanism) of the first inclined protrusion 92a downward. Thus, the first inclined recess 98a presses the first inclined protrusion 92a downward, and the first elastic portion 82a (first rear elastic portion 85a and first front elastic portion 86a) of the first engagement latch 77a is elastically deformed and pressed downward. Furthermore, the inclined surface 100 of the second inclined recess 98b (pressing down mechanism) formed in the second through hole 99b of the slider 16 presses the inclined surface 91 (pressing down mechanism) of the second inclined protrusion 92b downward. Thus, the second inclined recess 98b presses the second inclined protrusion 92b downward. Consequently, the second elastic portion 82b (second rear elastic portion 85b and second front elastic portion 86b) of the second engagement latch 77b is elastically deformed and pressed downward.

When the first and second elastic portions 82a, 82b (first and second rear elastic portions 85a, 85b and first and second front elastic portions 86a, 86b) of the first and second engagement latches 77a, 77b are pressed downward, the engagement of the first and second engagement portions 84a, 84b of the first and second engagement latches 77a, 77b with the optical connector adapter is released. Thus, the first and second optical connector assemblies 11a, 11b can be pulled out from the optical connector adapter and the connection (optical connection) between the optical connector plug 10 and the optical connector adapter is released.

For example, if the first and second front portions 88a, 88b (center of the first and second elastic portions 82a, 82b) of the first and second rear elastic portions 85a, 85b depress downward and the first and second tip portions 83a, 83b (front portion of the first and second elastic portions 82a, 82b) of the first and second engagement latches 77a, 77b curve upward when the first and second elastic portions 82a, 82b (first and second rear elastic portions 85a, 85b and first and second front elastic portions 86a, 86b) of the first and second engagement latches 77a, 77b elastically deform, the first and second tip portions 83a, 83b lift upward from the upper surface 35 of the top wall 31 of the front end portion of the first and second plug frames 20a, 20b (separate upward from the upper surface 35 of the top wall 31), and the downward pressing of the first and second elastic portions 82a, 82b (first and second rear elastic portions 85a, 85b and first and second front elastic portions 86a, 86b) may become insufficient.

If the first and second elastic portions 82a, 82b (first and second rear elastic portions 85a, 85b and first and second front elastic portions 86a, 86b) cannot be sufficiently pressed downward when the slider 16 is slid rearward in the axial direction, the engagement of the first and second engagement portions 84a, 84b of the first and second engagement latches 77a, 77b with the optical connector adapter is maintained. Thus, the first and second optical connector assemblies 11a, 11b cannot be pulled out from the optical connector adapter and the connection (optical connection) between the optical connector plug 10 and the optical connector adapter cannot be released.

However, in the duplex optical connector plug 10, when the slider 16 is slid rearward in the axial direction, even if the first and second elastic portions 82a, 82b (first and second rear elastic portions 85a, 85b and first and second front elastic portions 86a, 86b) of the first and second engagement latches 77a, 77b elastically deform, the first and second tip portions 83a, 83b of the first and second engagement latches 77a, 77b curve upward and the first and second tip portions 83a, 83b lift upward from the upper surfaces 35 of the top walls 31 of the front end portions of the first and second plug frames 20a, 20b, the upwardly inclined surface 89 of the first tip portion 83a contacts the downwardly inclined surface 46 of the first recessed hole portion 44a and the upwardly inclined surface 89 of the second tip portion 83b contacts the downwardly inclined surface 46 of the second recessed hole portion 44b.

Since the upwardly inclined surfaces 89 of the first and second tip portions 83a, 83b contact the downwardly inclined surfaces 46 of the first and second recessed hole portions 44a, 44b, the first and second tip portions 83a, 83b are prevented from lifting further upward by the first and second recessed hole portions 44a, 44b. Since the first and second tip portions 83a, 83b are prevented from lifting upward, the first and second front portions 88a, 88b (center of the first and second elastic portions 82a, 82b) of the first and second rear elastic portions 85a, 85b do not depress downward, and the first and second elastic portions 82a, 82b (first and second rear elastic portions 85a, 85b and first and second front elastic portions 86a, 86b) of the first and second engagement latches 77a, 77b elastically deform downward and pressed downward by the pressing action of the first and second inclined protrusions 92a, 92b (pressing down mechanism) and the first and second inclined recesses 98a, 98b (pressing down mechanism) of the slider 16.

In the duplex optical connector plug 10, when the first engagement latch 77a elastically deforms and the first tip portion 83a lifts upward, the upwardly inclined surface 89 of the first tip portion 83a contacts the downwardly inclined surface 46 of the first recessed hole portion 44a. When the second engagement latch 77b elastically deforms and the second tip portion 83b lifts upward, the upwardly inclined surface 89 of the second tip portion 83b contacts the downwardly inclined surface 46 of the second recessed hole portion 44b. Therefore, the first and second tip portions 83a, 83b with the upwardly inclined surfaces 89 contacting the downwardly inclined surfaces 46 do not lift any more. In addition, the upward curving of the first and second tip portions 83a, 83b (front portions of the first and second elastic portions 82a, 82b) when pressing the first and second elastic portions 82a, 82b of the first and second engagement latches 77a, 77b downward can be reliably prevented. The first and second elastic portions 82a, 82b can be elastically deformed downward and sufficiently pressed downward, and the connection (optical connection) between the optical connector plug 10 and the optical connector adapter can be smoothly released.

In the duplex optical connector plug 10, the vertical thickness dimension of the first rear elastic portion 85a of the first elastic portion 82a of the first engagement latch 77a gradually increases from the first connection portion 81a toward the first engagement portion 84a, and the vertical thickness dimension of the second rear elastic portion 85b of the second elastic portion 82b of the second engagement latch 77b gradually increases from the second connection portion 81b toward the second engagement portion 84b. Thus, the rigidity of the first and second rear elastic portions 85a, 85b extending toward the first and second engagement portions 84a, 84b is greater than that of the first and second rear elastic portions 85a, 85b extending toward the first and second connection portions 81a, 81b. The first and second rear elastic portions 85a, 85b on the side of the first and second engagement portions 84a, 84b are difficult to elastically deform. When the first and second elastic portions 82a, 82b of the first and second engagement latches 77a, 77b are pressed downward, the first and second rear elastic portions 85a, 85b extending toward the first and second engagement portions 84a, 84b do not curve upward, and the first and second elastic portions 82a, 82b can be elastically deformed downward and sufficiently pressed downward.

In the duplex optical connector plug 10, the vertical thickness dimension of the first and second front elastic portions 86a, 86b of the first and second elastic portions 82a, 82b is smaller than that of the first and second rear elastic portions 85a, 85b. Thus, the rigidity of the first and second rear elastic portions 85a, 85b is greater than that of the first and second front elastic portions 86a, 86b and the vertical elastic force of the first and second front elastic portions 86a, 86b is smaller than that of the first and second rear elastic portions 85a, 85b. While the first and second rear elastic portions 85a, 85b are difficult to elastically deform, the first and second front elastic portions 86a, 86b elastically deform more easily compared to the first and second rear elastic portions 85a, 85b. Therefore, when the first and second elastic portions 82a, 82b of the first and second engagement latches 77a, 77b are pressed downward, the front portions of the first and second rear elastic portions 85a, 85b do not curve upward, and the first and second elastic portions 82a, 82b can be elastically deformed downward and sufficiently pressed downward.

In the duplex optical connector plug 10, the pressing down mechanism is formed from: the first inclined protrusion 92a formed on the first rear elastic portion 85a of the first engagement latch 77a and inclining with an ascending gradient rearward in the axial direction; the second inclined protrusion 92b formed on the second rear elastic portion 85b of the second engagement latch 77b and inclining with an ascending gradient rearward in the axial direction; the first inclined recess 98a formed on one side of the slider 16 and slidably contacting the first inclined protrusion 92a while recessing with an ascending inclination rearward in the axial direction; and the second inclined recess 98b located on the other side of the slider 16 and slidably contacting the second inclined protrusion 92b while recessing with an ascending inclination rearward in the axial direction. Therefore, when the slider 16 is slid rearward in the axial direction relative to the outer housing 15, the pressing down mechanism reliably operates to cause the slider 16 to press the first and second engagement latches 77a, 77b downward. Thus, the first and second elastic portions 82a, 82b are elastically deformed downward using the slider 16 and sufficiently pressed downward. Therefore, the connection (optical connection) between the optical connector plug 10 and the optical connector adapter can be reliably released.

The first and second optical connector assemblies 11a, 11b of the optical connector plug 10 can be pulled out from the optical connector adapter and the connection between the optical connector plug 10 and the optical connector adapter can be smoothly released by only sliding the slider 16 rearward in the axial direction relative to the outer housing 15.

### Description of the Reference Numerals

10: duplex optical connector plug, 11a: first optical connector assembly, 11b: second optical connector assembly, 12a: first gear, 12b: second gear, 13: intermediate gear, 14: inner housing, 15: outer housing, 16: slider, 17: crimp ring, 18: boot, 19a: first ferrule, 19b: second ferrule, 20a: first plug frame, 20b: second plug frame, 21a: first stop ring, 21b: second stop ring, 22a: first spring, 22b: second spring, 23a: first capillary, 23b: second capillary, 24a: first sleeve, 24b: second sleeve, 25a: first optical fiber, 25b: second optical fiber, 26: tip surface, 27: chamfered portion, 28: pipe, 29a: first core cover, 29b: second core cover, 30a: first flange, 30b: second flange, 31: top wall, 32: bottom wall, 33: side wall, 34: side wall, 35: upper surface, 36a: first guide protrusion, 36b: second guide protrusion, 38a: first engagement recess, 38b: second engagement recess, 44a: first recessed hole portion, 44b: second recessed hole portion, 45: rear end surface, 46: downwardly inclined surface, 47: front end portion, 48: intermediate portion, 49: rear end portion, 54: top wall, 55: bottom wall, 56: side wall, 57: side wall, 58a: first opening, 58b: second opening, 59: cylindrical portion, 62: partition wall, 63a: first gear accommodation portion, 63b: second gear accommodation portion, 64: intermediate gear accommodation portion, 71: top wall, 72: bottom wall, 73: side wall, 74: side wall, 75: front end opening, 76: rear end opening, 77a: first engagement latch, 77b: second engagement latch, 78: engagement key, 81a: first connection portion, 81b: second connection portion, 82a: first elastic portion, 82b: second elastic portion, 83a: first tip portion, 83b: second tip portion, 84a: first engagement portion, 84b: second engagement portion, 85a: first rear elastic portion, 85b: second rear elastic portion, 86a: first front elastic portion, 86b: second front elastic portion, 87a: first rear portion, 87b: second rear portion, 88a: first front portion, 88b: second front portion, 89: upwardly inclined surface, 90: contact surface, 91: inclined surface, 92a: first inclined protrusion (pressing down mechanism), 92b: second inclined protrusion (pressing down mechanism), 93: frame, 94: sliding top wall, 95a: first outer guide wall, 95b: second outer guide wall, 96a: first inner guide wall, 96b: second inner guide wall, 97a: first entry path, 97b: second entry path, 98a: first inclined recess (pressing down mechanism), 98b: second inclined recess (pressing down mechanism), 100: inclined surface, 101: key engagement portion, 102: optical fiber cord

## Claims

1. A duplex optical connector plug comprising:
a first optical connector assembly having a first plug frame accommodating a first ferrule that holds a first optical fiber and extends in an axial direction, a first stop ring engaged with the first plug frame and a first spring installed between the first ferrule and the first stop ring to bias the first ferrule forward in the axial direction;
a second optical connector assembly having a second plug frame accommodating a second ferrule that holds a second optical fiber and extends in the axial direction, a second stop ring engaged with the second plug frame and a second spring installed between the second ferrule and the second stop ring to bias the second ferrule forward in the axial direction, the second optical connector assembly being parallel to the first optical connector assembly;
an inner housing accommodating rear end portions of the first and second stop rings; and
an outer housing accommodating the inner housing, wherein
each of the first and second plug frames has a guide protrusion protruding upward from a top wall of a front end portion of each of the first and second plug frames,
the guide protrusion has a recessed hole portion recessed to a front in the axial direction from a rear end surface facing each of the first and second stop rings,
the outer housing has a front end opening that opens at a front end of the outer housing, a first engagement latch that is elastically deformable, extends in the axial direction from one side portion of the top wall of the outer housing and extends forward in the axial direction from the front end opening and a second engagement latch that is elastically deformable, extends in the axial direction from the other side portion of the top wall of the outer housing and extends forward in the axial direction from the front end opening,
each of the first and second engagement latches has a tip portion located on the top wall of the front end portion of each of the first and second plug frames so as to enter the recessed hole portion, and an engagement portion formed rearward of the tip portion in the axial direction so as to engage with an optical connector adapter when the first and second connector assemblies are inserted into the optical connector adapter, and
an upward lifting of the tip portion is prevented by the recessed hole portion when the first and second engagement latches are elastically deformed.

2. The duplex optical connector plug according to claim 1, wherein
the recessed hole portion has a downwardly inclined surface that inclines downward toward the front in the axial direction from the rear end surface of the guide protrusion,
the tip portion of each of the first and second engagement latches has an upwardly inclined surface that inclines upward toward a rear in the axial direction from a front end of the tip portion and a contact surface configured to contact the top wall of the front end portion of each of the first and second plug frames, and
the upwardly inclined surface of the tip portion is configured to contact the downwardly inclined surface of the recessed hole portion when the first and second engagement latches are elastically deformed and the tip portion is lifted upward.

3. The duplex optical connector plug according to claim 1, wherein
each of the first and second engagement latches has a connection portion connected to the top wall of the outer housing and an elastic portion extending forward in the axial direction from the connection portion and extending forward in the axial direction from the front end opening of the outer housing,
the elastic portion has a rear elastic portion located between the connection portion and the engagement portion and extending in the axial direction and a front elastic portion located between the engagement portion and the tip portion and extending in the axial direction, and
a vertical thickness dimension of the rear elastic portion gradually increases from the connection portion toward the engagement portion.

4. The duplex optical connector plug according to claim 3, wherein
a length dimension of the rear elastic portion of the elastic portion in the axial direction is longer than the length dimension of the front elastic portion of the elastic portion in the axial direction,
the front elastic portion inclines downward from a front end of the rear elastic portion to the front in the axial direction, and
the vertical thickness dimension of the front elastic portion is smaller than the vertical thickness dimension of the rear elastic portion.

5. The duplex optical connector plug according to claim 4, wherein
the rear elastic portion of the elastic portion has a rear portion extending forward in the axial direction from the connection portion to an intermediate position of the rear elastic portion and a front portion extending forward in the axial direction from the intermediate position of the rear elastic portion with a downward inclination and further extending to the engagement portion, and
the vertical thickness dimension of the front elastic portion is smaller than the vertical thickness dimension of the rear portion and the front portion of the rear elastic portion.

6. The duplex optical connector plug according to claim 5, wherein
a vertical elastic force of the front elastic portion is smaller than the vertical elastic force of the rear portion and the front portion of the rear elastic portion, and
the front elastic portion is elastically deformed more easily compared to the rear portion and the front portion.

7. The duplex optical connector plug according to claim 1, wherein
an upwardly inclined surface of the tip portion of the first and second engagement latches is configured to contact a downwardly inclined surface of the recessed hole portion when connection between the duplex optical connector plug and the optical connector adapter is released.

8. The duplex optical connector plug according to claim 1, wherein
the duplex optical connector plug has a slider connected so as to be slidable in the axial direction, and
an engagement state of the first and second engagement latches with the optical connector adapter is released in a state that the tip portion of the first and second engagement latches enters the recessed hole portion of the guide protrusion when the slider is slid rearward in the axial direction.

9. The duplex optical connector plug according to claim 8, wherein
each of the first and second engagement latches has an inclined upper surface of the front portion of the rear elastic portion extending forward in the axial direction with a downward inclination from the intermediate position, and
the slider has an inclined lower surface formed on both sides of the slider and slidably contacted to the inclined upper surface, the inclined lower surface extending rearward in the axial direction with an upward inclination.
